(19) Europäisches Patentamt
European Patent Office
Office européen des brevets

(11) Publication number: 0 001 173
B1

(12) EUROPEAN PATENT SPECIFICATION

(45) Date of publication of patent specification: 08.04.81

(51) Int. Cl.³: B 23 K 20/16

(21) Application number: 78300345.2

(22) Date of filing: 05.09.78

# (54) A process for the diffusion welding of copper and stainless steel.

(30) Priority: 05.09.77 JP 105925/77

(43) Date of publication of application:
21.03.79 Bulletin 79/6

(45) Publication of the grant of the European patent:
08.04.81 Bulletin 81/14

(84) Designated Contracting States:
BE CH DE FR GB LU NL

(56) References cited:
DE - C - 317 281
DE - C - 923 106
FR - A - 1 349 667
GB - A - 609 490
GB - A - 699 067
US - A - 3 634 048

(73) Proprietor: MITSUBISHI JUKOGYO KABUSHIKI KAISHA
5-1, Marunouchi 2-chome Chiyoda-ku
Tokyo (JP)

(72) Inventor: Uto Yoshimitsu
1286-3, Oaza-Kurashige Itsukaichi-cho
Saiki gun, Hiroshima Prefecture (JP)
Inventor: Omae, Takashi
700-427, Oaza-Tomo Numato-cho
Hiroshima City, Hiroshima Prefecture (JP)
Inventor: Fukaya Yasuhiro
5-15-304,Kanonshin-machi 3-chome
Hiroshima City, Hiroshima Prefecture (JP)
Inventor: Yoshida, Yasuyuki
17-9, Satsukigaoka 1-chome Itukaichi-cho
Saiki gun, Hiroshima Prefecture (JP)

(74) Representative: Lawson, David Glynne et al,
MARKS & CLERK 57-60 Lincoln's Inn Fields
London WC2A 3LS (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 001 173 B1

# A process for the diffusion welding of copper and stainless steel

This invention relates to the diffusion welding of copper and stainless steel using an interposed insert metal, to provide stainless steel-clad copper having corrosion resistance, and more specifically to means for providing copper-stainless steel clad plates of practical value.

Parts of chemical apparatus often use copper-stainless steel clad plates, made typically by explosive bonding and roll cladding techniques.

Numerous methods for obtaining thin metal coatings, e.g. electrolytic plating, hot dip plating, metal spraying, vacuum vapour deposition, and other similar methods are known. However stainless steels which are excellently corrosion-resistant alloy steels, cannot be melted to form a suitable plating bath and thus fail to lend themselves easily to electrolytic plating. Moreover, because of their higher melting points than copper, stainless steels cannot be used in hot dip plating. Furthermore, sprayed stainless steel becomes porous, and there are difficulties in making thick deposits by vacuum vapour.

Diffusion welding is a process in which the objects to be joined together are heated to a temperature approximately above their recrystallization points and are bonded in a solid phase by the application of a pressure. In joining copper and stainless steel, diffusion welding is not in practical use yet because of the inability of attaining adequate bonding strength, this difficulty is due, for example, to (1) formation of a hardened, brittle compound layer, (2) "brass cracking" as a result of the diffusion of copper into grain boundaries of stainless steel, and (3) separation and buildup of impurity oxygen out of copper into the interface of the bond (which can result in a gas pressure high enough to force the joined surfaces apart), as will be described in the examples to be given later.

British Patent Specification 609490 discloses a method of making multi-ply metal stock of copper and stainless steel, in which these metals and an intervening metal insert of nickel and silver are subjected to heat and pressure to diffusion-weld the metals. This process has the disadvantage that nickel readily permits diffusion of copper at high temperatures, and the nickel layer is too thin to prevent diffusion of copper into the stainless steel, leading to "brass cracking" as already mentioned.

The present invention has for its object to provide a practical process for the diffusion welding of copper and stainless steel, which overcomes all of the aforedescribed disadvantages of the conventional processes.

More particularly, the invention aims at providing a novel process capable of fabricating a clad plate having adequate bonding strength and desirable physical properties, through the use of a selected insert metal.

According to the invention, a process for integrally bonding copper and stainless steel, in which a layer of an insert metal is provided between the copper and stainless steel to be joined together, and then the copper insert metal layer, and stainless steel are subjected to heat and pressure to effect diffusion welding thereof, is characterised in that the insert layer is at least one of Ni-Cr alloys, Cr-Ni alloys, and Cr, and contains not more than 140 p.p.m. of $O_2$.

The use of chromium as the insert metal, as part of the insert metal, can prevent diffusion of copper. The chromium of low oxygen content absorbs impurity oxygen which therefore is prevented from damaging the bond.

Preferably, the process comprises the steps of smoothing the surfaces of copper and stainless steel to be bonded together, cleaning both surfaces until chemically active sufaces are exposed on both, bringing the active surfaces into close contact through the layer of insert metal, which has a thickness more than $5\mu$; and then effecting the diffusion welding of the copper, insert metal layer, and stainless steel in a vacuum or a non-oxidising atmosphere at a temperature from 850° to 950°C.

In the accompanying drawings:—

FIG. 1 is a microphotograph of a diffusion-welded joint formed by an ordinary diffusion welding process;

FIG. 2 is a graphic representation of the hardness distribution in the diffusion-welded joint of FIG. 1;

FIG. 3 is a graphic representation of the separation of impurity oxygen in copper; and

FIGS. 4 (A), (B) and FIGS. 5 (A), (B) are microphotographs (A) and graphs of hardness distribution (B) of diffusion-welded joints formed by the process of the invention.

Table 1 summarizes the results of experiments in which copper and stainless steel were bonded by ordinary diffusion welding. In the process, copper (tough pitch copper) and stainless steel (SUS 304) were joined in a vacuum atmosphere of $10^{-4}$ torr under various conditions.

TABLE 1

| Exp. No. | Welding temp. | Pressure | Welding time | Bonding strength * |
|---|---|---|---|---|
| 1 | 400°C | 0.1 – 5 kg/mm² | 1 – 120 min. | 1 – 2 kg/mm² |
| 2 | 800 | ,, | ,, | 3 – 4 |
| 3 | 900 | ,, | ,, | 3 – 5 |
| 4 | 950 | ,, | ,, | 3 – 6 |
| 5 | >1000 | ,, | ,, | 5 – 7 serious deform. |

* in conformity with the ASTM shearing strength test procedure.

As can be seen from Table 1, the direct diffusion welding of copper and stainless steel will produce a bonding strength, or a shearing strength as determined by the ASTM procedure, of at most about 7 kg/mm². The shearing strength (8.4 kg/mm²) required of the clad plate by the ASTM standards is never attained.

As stated, diffusion welding is a process in which the pieces to be joined together are heated above their recrystallization points, and welding proceeds with the application of a pressure from a fraction to several kilograms per square millimeter. Because the recrystallization point of copper is about 220°C and that of stainles steel about 400°C, the test data given in Table 1 may be taken to have covered substantially the whole range of practical conditions for diffusion welding of copper and stainless steel. The results indicate that at low welding temperatures adequate atomic diffusion does not occur and the resulting weld lacks strength, and at high welding temperatures the abovementioned phenomena (1) to (3), Viz. formation of a brittle compound layer, brass cracking, and buildup of oxygen at the interface, take place and again the weld cannot have satisfactory strength.

FIG. 1 is a microphotograph of the diffusion-welded joint formed (at a welding temperature of 950°C and at a pressure of 0.5 kg/mm² applied for 60 minutes) in Experiment No 5 of Table 1. In the photograph the symbol $\alpha$ indicates copper: $\beta$, stainless steel: $\gamma$, an alloy layer; and 1, solder brittleness that resulted from the invasion of copper into the grain boundaries of stainless steel.

FIG. 2 is a graphic representation of the hardness distribution ($H_v$) in the diffusion-welded joint shown in FIG. 1. Throughout the two figures like symbols are used to designate like portions of the joint.

FIG. 3 graphically illustrates the separation of impurity oxygen from copper in the diffusion-welded joint made (at a welding temperature of 800°C and a pressure of 1.0 kg/mm² applied for 60 minutes) in Experiment 2 of Table 1. This figure again uses the symbols in common with FIG. 1.

In accordance with the invention, the described problems can be overcome by interposing a suitable insert metal between the surfaces of the copper and stainless steel to be united.

The use of an insert metal is itself a practice not uncommon in the art of diffusion welding. The technique is known, for example, from U.S. Patent No. 3,530,568 to William A. Owczarski et al, as well as from the previously mentioned U.K. Patent Specification 609490. Generally, however, the insert metal varies with different combinations of dissimilar materials to be welded. The insert metal disclosed by the U.S. patent is good only for the particular combination of the particular materials. The present invention is concerned with insert metals suitable for the diffusion welding of stainless steel and copper, and there will also be described appropriate conditions for the welding operation, which are both novel without any precedent in the art.

The stainless steel-clad copper plate formed in accordance with the invention is a composite material which combines the high electrical and thermal conductivities of copper with the excellent corrosion resistance and mechanical strength of stainless steel, and the product, with properties far better than the copper or stainless steel alone, has diverse applications.

The effects of the use of an insert metal according to the invention upon the thermal conductivity and specific resistance of the resulting clad plate will now be discussed. Table 2 gives the properties of metals for cladding and insertion.

TABLE 2

Properties of cladding metals and insert metals

| | | Thermal conductivity (cal/cm/sec/°C) | Electrical resistivity (uΩ, cm) |
|---|---|---|---|
| Cladding metals | Copper | 0.943 | 1.692 |
| | Stainless steels | | |
| | austenitic | 0.039 | 72.0 |
| | ferritic | 0.063 | 60.0 |
| | martensitic | 0.059 | 55.0 |
| Insert metals | Cr | 0.16 | 12.8 |
| | Ni | 0.215 | 7.8 |

As clearly shown in Table 2, the insert metals to be used in performing the invention are not inferior to stainless steels in both thermal conductivity and specific resistance. Therefore, the presence of an insert metal according to the invention will not adversely affect the fundamental properties of the copper-stainless steel clad plate.

The present invention can be performed in the following ways:

(1) The surface of either the copper or stainless steel to be bonded is thinly plated with Cr, and the plated surface is superposed on the other metal so that the two surfaces are held in contact, and then the two metals are diffusion welded in usual manner, with the thin plating layer utilized as an insert metal between them.

(2) The surfaces of both the copper and stainless steel to be welded are thinly plated with Cr, and the two metals are superposed so that the two plated surfaces are in contact, and then, using the thin plated layers as an insert, the two metals are conventionally diffusion welded.

(3) A thin plating layer of Ni or Cr is formed on the surface of either the copper or stainless steel to be joined, the plated surface is further plated with Cr or Ni, and then the other metal is placed on the double plated metal and diffusion welded by a usual method, using the two different plating layers as an insert.

(4) At least either surface of copper or stainless steel to be bonded is thinly plated with Cr, and a Ni foil is interposed as an insert metal between the plated and unplated surfaces, and then diffusion welding is performed in the usual way.

(5) A Cr-Ni or Ni-Cr alloy foil is inserted between copper and stainless steel surfaces, and then the sandwich is diffusion welded by an ordinary method.

For the purposes of the invention, the thin layer of Cr, Cr-Ni or Ni-Cr alloys and Ni with low gas content, may be in the form of (i) a plating layer formed on the surface of a metal to be bonded, by electrolysis, vacuum evaporation, etc., or (ii) a foil formed by vacuum melting, or by air melting and their degassing treatment.

The diffusion welding process of the invention will be described in further detail below in terms of procedures as classified by the methods of metal insertion.

(a) Cr insertion method

This method is directed to Cu-Cr stainless steel bonding. As the insert metal, a Cr plating layer formed on either of the surfaces to be joined is used. A plating layer is employed because Cr usually cannot readily be stretched to a foil. Cr forms solid solutions with Cu and stainless steel and produces no brittle intermetallic compound, and the presence of the Cr layer provides a barrier against the intrustion of Cu into the grain boundaries of stainless steel. Hence it gives a satisfactory joint. In addition, Cr, which is a powerful captivator of oxygen, takes in the oxygen that comes out of copper into the bond interface, by a reaction

$$2Cr + 1—1/2\ O_2 \rightarrow Cr_2O_3$$

and thereby avoids the generation of a gas pressure and gives a desirable joint. Particularly because a plating layer of low-oxygen electrolytic Cr is employed, the great oxygen-capturing capacity of the insert metal is fully displayed, and excellent joint properties are obtained by diffusion welding at a temperature in the range of 850°—950°C.

(b) Cr-Ni or Ni-Cr alloy insert method:

This method aims at the bonding of Cu-stainless steel. Cr-Ni or Ni-Cr alloys for use as an insert metal may be in the form of alloy foil with low-oxygen content, formed by vacuum melting, or an alloy plated layer formed on a bonding surface by vacuum evaporation may be used as an insert material layer.

The characteristics of these insert materials are that said alloys are solid-melted to Cu and stainless steel, giving rise to no brittle intermetallic compound at all and preventing solder brittleness due to the ingress of Cu into grain boundaries of stainless steel.

(c) Cr-Ni or (c') Ni-Cr insertion method

This is directed to Cu-Cr-Ni-stainless steel or Cu-Ni-Cr-stainless steel bonding. (As mentioned above, the Cr-Ni- or Ni-Cr insertion method is named after the order of metal layers from the Cu surface onward.) Each metal used as the insert is in the form of a plating layer. A Ni foil may also be used. Both Cr and Ni form solid solutions with copper and stainless steel and give no brittle intermetallic compound.

The effect of Cr on the prevention of solder brittleness and solid solution effect of gas can be developed as already explained in the above mentioned (a).

Also, Ni is perfectly solid-melted in Cu and stainless steel, giving no brittle intermetallic compound at all. In addition, the amount of solid solution of oxygen ius considered so large (0.07%$O_2$ at 600°C and 0.04%$O_2$ at 1,200°C) that Ni can dissolve oxygen as a solid solution which is accumulated from copper onto the border surface, then preventing the formation of gas and permitting the production of good-quality coupling as the characteristics of the present invention.

In particular, according to the invention, electrolyzed Ni plating with low-oxygen content or Ni foil formed by vacuum melting is employed so that its effect on solid solution of oxygen is excellent, increasing such effect markedly and ensuring excellent coupling properties at bonding temperatures such as 850—950°C.

Moreover, the present method wherein Ni is not inserted singly but both Ni and Cr are inserted is intended to avoid the drawback that Ni alone presents too thin a layer and Cu atoms are easily diffused in Ni at high welding temperatures until they reach grain boundaries of stainless steel, thus causing solder brittleness.

Since Cr has a high melting point, it can prevent the diffusion of Cu atoms into grain boundaries of stainless steel, so that Ni and Cr in combination may become more effective than otherwise.

Since one of the metals to be diffusion welded by the process of the invention employing the afore-described insert metals is copper which has an affinity for rapid oxidation, the welding is desirably performed in an atmosphere of an inert gas, such as Ar or He, or in a vacuum. The types of stainless steels to which the process of the invention is applicable include austenitic, ferritic, and martensitic steels.

The invention will now be more fully described in connection with examples thereof.

EXAMPLES

Copper (tough pitch copper) and stainless steel (SUS 304) were diffusion welded in a vacuum atmosphere of $10^{-4}$ torr, using the various insert metals described above. The results are summarized in Table 3, in which SS means Stainless Steel; the bond strength was measured by the ASTM shearing strength test procedure.

TABLE 3

| Method | Insertion procedure | Insert thickness (per layer) | Pressure applied |
|---|---|---|---|
| (a) Cr insertion method | (1) Cu plated with Cr and welded to SS.<br>(2) SS plated with Cr and welded to Cu. | 10, 50, or 100 ($\mu$) | 0.1, 2.5, 5 ($Kg/mm^2$) |
| (c) Cr–Ni insertion method | (1) Cu plated with Cr, SS plated with Ni, and welded together.<br>(2) Cu plated with Cr and then with Ni, and welded to SS.<br>(3) SS plated with Ni and then with Cr, and welded to Cu.<br>(4) Cr-plated Cu and SS welded with a vacuum-melted Ni foil in between. | " | " |
| (c') Ni–Cr insertion method | (1) Cu plated with Ni, SS plated with Cr, and welded together.<br>(2) Cu plated with Ni and then with Cr, and welded to SS.<br>(3) SS plated with Cr and then with Ni, and welded to Cu.<br>(4) Cr-plated SS and Cu welded with a vacuum-melted Ni foil in between. | " | " |

TABLE 3 (Continued)

| Method | Bonding time | Bonding temp | Bonding strength | Brass cracking |
|---|---|---|---|---|
| (a) Cr insertion method | 1–120 (min.) | 850° C | 18–20 kg/mm² (Cu rupture) | none |
| | | 900° C | 19–21 ″ ( ″ ) | ″ |
| | | 950° C | 20–22 ″ ( ″ ) | ″ |
| (c) Cr–Ni insertion method | ″ | 800°C | 13–16 ″ (insert rupture) | ″ |
| | | 850°C | 19–20 ″ (Cu rupture) | ″ |
| | | 900°C | 20–21 ″ ( ″ ) | ″ |
| | | 950° C | 20–22 ″ ( ″ ) | ″ |
| (c') Ni–Cr insertion method | ″ | 800° C | 13–16 ″ (insert rupture) | ″ |
| | | 850° C | 19–20 ″ (Cu rupture) | ″ |
| | | 200° C | 19–21 ″ ( ″ ) | ″ |
| | | 950° C | 20–33 ″ ( ″ ) | ″ |

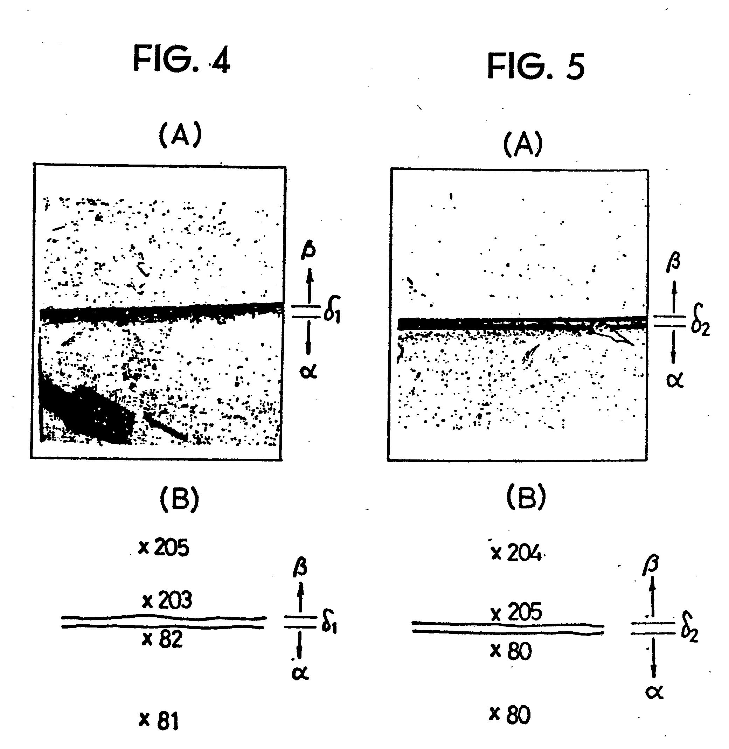

A microphotograph of the diffusion-welded joint obtained by the Ni-Cr alloy insertion procedure (b) using a welding temperature of 950°C, a pressure of 0.5 kg/mm², and a welding time of 60 minutes, is shown in Fig. 4(A), and the hardness distribution ($H_v$) in the joint is indicated in Fig. 4(B). Also, a microphotograph of the diffusion-welded joint obtained by the procedure (1) of the Cr insertion method (a) in Table 3, under the conditions of a welding temperature of 950°C, a pressure of 0.5 kg/mm², and a welding time of 60 minutes, is shown in Fig. 5(A), and the hardness distribution ($H_v$) in the joint is indicated in Fig. 5(B). In both figures, the symbol $\alpha$ is tough pitch copper, $\beta$ is stainless steel, SUS 304 grade, $\delta_1$ is a Cr.76% Ni-8% Fe alloy, and $\delta_2$ is Cr.

Typical examples in the examples of Table 3 will be described in detail below.

(1) Cr-Ni alloy insertion method. A Cu plate and a stainless steel plate (austenite) were diffusion-welded with an insert of Cr-Ni Fe alloy foil after air-melting and degassing.

The foil used was 0.05 mm thick, and its $O_2$ content was 140 ppm. (The alloy melted in air had an $O_2$ content of 150—300 ppm, whereas the vacuum-melted alloy contained only 10—25 ppm $O_2$. The

$O_2$ content of the air-melted alloy was decreased to 30—140 ppm a degassing treatment. The air-melted foils showed poor bonding properties.)

The Cu plate was 15 mm thick, 150 mm wide, and 300 mm long, and the stainless steel (austenitic) plate was 1.5 mm thick, 150 mm wide, and 300 mm long. The two plates sandwiching the foil in between were diffusion welded in a vacuum at a bonding temperature of 950°C and a pressure of 2.5 kg/mm² for a period of 60 minutes. After the bonding, the joint strength was determined and values of 22.0, 22.5, and 22.8 kg/mm² were obtained by tests conducted in conformity with the ASTM shearing strength test procedure. A good clad plate with a microstructure free of solder brittleness resulted.

Moreover, the clad plate soldered by above condition using vacuum-melted alloy foil ($O_2$ content 18 ppm) as an insert metal showed nearly the same value as above-mentioned joint strength and joint ability.

(2) Cr-plating insertion method

A Cu plate was electroplated with Cr to a plating thickness of 10 $\mu$ under the following conditions:

| | |
|---|---|
| Electrolyte composition | |
| Chromic acid | 220 g/l |
| Sulphuric acid | 2.2 g/l |
| Temperature | 50°C |
| Plating current | 30 A/dm² |
| $O_2$ content of the plating | .25 ppm or less |

The Cu plate was 20 mm thick, 100 mm wide, and 300 mm long, and the stainless steel (ferritic) plate was 1.5 mm thick, 100 mm wide, and 300 mm long. They were diffusion welded in a vacuum at a bonding temperature of 950°C and a pressure of 0.5 kg/mm² for a period of 120 minutes. After the bonding, the joint strength was determined. Tests according to the ASTM shearing strength test procedure gave strength values of 20.0, 20.5, and 21.3 kg/mm². The clad plate thus obtained was satisfactory with a microstructure free of solder brittleness.

The insert metal is desirably more than 5 $\mu$ in thickness, because an insert metal layer of about 1—3 $\mu$ will be subject to diffusion of Cu, Fe, Cr and Ni atoms from the Cu and stainless steel, with consequent alloying and deterioration in strength and other physical properties.

There is no upper limit of the insert thickness. However, foils in commercial production usually are up to about 500 $\mu$ in thickness, and an insert thickness exceeding 500 $\mu$ will show unsatisfactory physical properties.

As will be understood from Table 3 and FIGS. 4 and 5, it has been found that welded joints with desirable properties are obtained without the formation of any brittle intermetallic compound or the occurrence of solder brittleness, and further without the slightest phenomenon of welded surface separation due to generation of gas pressure.

It is also clear that the process of the invention is all the more effective on the tough pitch copper with a high oxygen content than on oxygen-free or deoxidized copper.

## Claims

1. A process for diffusion welding of copper and stainless steel, wherein a layer of an insert metal is provided between the copper and stainless steel to be joined together, and the copper, insert metal layer, and stainless steel are then subjected to heat and pressure to effect diffusion welding thereof, characterised in that the insert layer is at least one of Ni-Cr alloys, Cr-Ni alloys, and Cr, and contains not more than 140 ppm of $O_2$.

2. A process according to claim 1 characterised in that the surfaces of copper and stainless steel to be joined together are smoothed and then cleaned, until chemically active surfaces are exposed on both, and the active surfaces are brought into close contact through the layer of insert metal, which has a thickness greater than 5$\mu$, before the diffusion welding, which diffusion welding is carried out in a vacuum or a non-oxidizing atmosphere at a temperature between 850° and 950°C.

3. A process as set forth in claim 1 or 2 characterised in that said copper is plated with Cr as said insert metal layer.

4. A process as set forth in claim 1 or 2 characterised in that said copper is plated with Cr and then with Ni to form a double plating as said insert metal layer.

5. A process as set forth in claim 1 or 2 characterised in that, said copper is plated with Ni and then with Cr to form a double plating as said insert metal layer.

6. A process as set forth in claim 1 or 2 characterised in that, said copper is plated with Cr and said stainless steel is plated with Ni, each as said insert metal layer.

7. A process as set forth in claim 1 or 2 characterised in that, said copper is plated with Ni and said stainless steel is plated with Cr, each as said insert metal layer.

8. A process as set forth in claim 1 or 2 characterised in that, said copper is plated with Cr as said insert metal layer, and a vacuum-melted Ni foil or Ni alloy foil is interposed as an additional insert metal layer between said Cr-plated copper and said stainless steel.

9. A process as set forth in claim 1 or 2 characterised in that, said stainless steel is plated with Cr as said insert metal layer.

10. A process as set forth in claim 1 or 2 characterised in that, said stainless steel is plated with Ni and then with Cr to form a double plating as said insert metal layer.

11. A process as set forth in claim 1 or 2 characterised in that, said stainless steel is plated with Cr and then with Ni to form a double plating as said insert metal layer.

12. A process as set forth in claim 1 or 2 characterised in that, said stainless steel is plated with Cr as said insert metal layer, and a vacuum-melted Ni foil is interposed as an additional insert metal layer between said Cr-plated stainless steel and said copper.

**Revendications**

1. Procédé de soudage par diffusion du cuivre et de l'acier inoxydable dans lequel une couche d'un métal d'insertion est disposée entre le cuivre et l'acier inoxydable à lier l'un à l'autre par soudage et le cuivre, la couche de métal d'insertion et l'acier inoxydable sont soumis à l'effet de la chaleur et de la pression pour effectuer leur soudage par diffusion, caractérisé en ce que la couche de métal d'insertion est au moins une couche d'alliages de Ni-Cr, d'alliages de Cr-Ni et de Cr et ne contient pas plus de 140 p.p.m de $O_2$.

2. Procédé conforme à la revendication 1, caractérisé en ce que les surfaces du cuivre et de l'acier inoxydable à joindre entre eux sont aplanies puis nettoyées jusqu'à ce que les deux métaux présentent une surface chimiquement active, que les surfaces actives sont amenées en contact intime à travers la couche de métal d'insertion, celle-ci ayant une épaisseur plus grande que 5 $\mu$, avant le soudage par diffusion, ledit soudage par diffusion étant exécuté dans le vide ou dans une atmosphère non oxydante à une température comprise entre 850°C et 950°C.

3. Procédé conforme à la revendication 1 ou à la revendication 2, caractérisé en ce que le cuivre est plaqué avec le chrome en tant que couche de métal d'insertion.

4. Procédé conforme à la revendication 1 ou à la revendication 2, caractérisé en ce que le cuivre est plaqué avec le chrome puis avec le nickel pour former un double placage en tant que couche de métal d'insertion.

5. Procédé conforme à la revendication 1 ou à la revendication 2, caractérisé en ce que le cuivre est plaqué avec le nickel puis avec le chrome pour former un double placage en tant que couche de métal d'insertion.

6. Procédé conforme à la revendication 1 ou à la revendication 2, caractérisé en ce que le cuivre est plaqué avec le chrome et l'acier inoxydable est plaqué avec le nickel, chaque placage en tant que couche de métal d'insertion.

7. Procédé conforme à la revendication 1 ou à la revendication 2, caractérisé en ce que le cuivre est plaqué avec le nickel et l'acier inoxydable est plaqué avec le chrome, chaque placage en tant que couche de métal d'insertion.

8. Procédé conforme à la revendication 1 ou à la revendication 2, caractérisé en ce que le cuivre est plaqué avec le chrome en tant que couche de métal d'insertion et une feuille de nickel fondue sous vide est interposée comme couche de métal d'insertion additionnel entre le cuivre plaqué de chrome et l'acier inoxydable.

9. Procédé conforme à la revendication 1 ou á la revendication 2, caractérisé en ce que l'acier inoxydable est plaqué avec le chrome en tant que couche de métal d'insertion.

10. Procédé conforme à la revendication 1 ou à la revendication 2, caractérisé en ce que l'acier inoxydable est plaqué avec le nickel et ensuite avec le chrome pour former un double placage en tant que couche de métal d'insertion.

11. Procédé conforme à la revendication 1 ou à la revendication 2, caractérisé en ce que l'acier inoxydable est plaqué avec le chrome et ensuite avec le nickel pour former un double placage en tant que couche de métal d'insertion.

12. Procédé conforme à la revendication 1 ou à la revendication 2, caractérisé en ce que l'acier inoxydable est plaqué avec le chrome en tant que couche de métal d'insertion et une feuille de nickel fondue sous vide est interposée comme couche de métal d'insertion additionnel entre l'acier inoxydable plaqué de chrome et le cuivre.

**Patentansprüche**

1. Verfahren zum Diffusions-Schweißen von Kupfer und rostfreiem (rost- bzw. korrosionsbeständigem) Stahl, wobei zwischen dem Kupfer und dem rostfreien Stahl als miteinander zu verbindenden Materialien eine Lage eines Einsatz- bzw. Zwischenmetalls vorgesehen wird und das Kupfer, die Zwischenmetall- Lage und der rostfreie Stahl dann der Einwirkung von Wärme und Druck unterworfen werden, um eine Diffusions-Schweißung derselben zu bewirken, dadurch gekennzeichnet, daß die Zwischenlage wenigstens eine aus Ni-Cr-Legierungen, Cr-Ni-Legierungen bzw. Cr ist und nicht mehr als 140 p.p.m. $O_2$ enthält.

2. Verfahren nach Anspruch 1, dadurch gekennzeichnet, daß die Oberflächen des Kupfers und des rostfreien Stahles als miteinander zu verbindende Materialien geglättet und dann gereinigt werden, bis an beiden chemisch aktive Flächen freigelegt sind, und daß die aktiven Flächen vor dem Diffusions-Schweißen durch die Lage des Zwischenmetalls, deren Dicke größer als 5 $\mu m$ ist, in festen Kontakt gebracht werden und das Diffusions-Schweißen in einem Vakuum oder einer nichtoxydierenden Atmosphäre bei einer Temperatur zwischen 850° und 950°C durchgeführt wird.

3. Verfahren nach einem der Anspruche 1 und 2, dadurch gekennzeichnet, daß das Kupfer mit Chrom als Zwischenmetall-Lage überzogen bzw. plattiert wird.

4. Verfahren nach einem der Ansprüche 1 und 2, dadurch gekennzeichnet, daß das Kupfer mit Chrom und dann mit Nickel überzogen bzw. plattiert wird, um einen doppelten Überzug als Zwischenmetall-Lage zu bilden.

5. Verfahren nach einem der Ansprüche 1 und 2, dadurch gekennzeichnet, daß das Kupfer mit Nickel und dann mit Chrom überzogen bzw. plattiert wird, um einen doppelten Überzug als Zwischenmetall-Lage zu bilden.

6. Verfahren nach einem der Ansprüche 1 und 2, dadurch gekennzeichnet, daß das Kupfer mit Chrom und der rostfreie Stahl mit Nickel überzogen bzw. plattiert wird, jeweils als Zwischenmetall-Lage.

7. Verfahren nach einem der Ansprüche 1 und 2, dadurch gekennzeichnet, daß das Kupfer mit Nickel und der rostfreie Stahl mit Chrom überzogen bzw. plattiert wird, jeweils als Zwischenmetall-Lage.

8. Verfahren nach einem der Ansprüche 1 und 2, dadurch gekennzeichnet, daß das Kupfer mit Chrom als Zwischenmetall-Lage überzogen bzw. plattiert wird und daß eine vakuumerschmolzene Nickel-Folie als zusätzliche Zwischenmetall-Lage zwischen dem chromüberzogenen Kupfer und dem rostfreien Stahl eingefügt wird.

9. Verfahren nach einem der Ansprüche 1 und 2, dadurch gekennzeichnet, daß der rostfreie Stahl mit Chrom als Zwischenmetall-Lage überzogen bzw. plattiert wird.

10. Verfahren nach einem der Ansprüche 1 und 2, dadurch gekennzeichnet, daß der rostfreie Stahl mit Nickel und dann mit Chrom überzogen bzw. plattiert wird, um einen doppelten Überzug als Zwischenmetall-Lage zu bilden.

11. Verfahren nach einem der Ansprüche 1 und 2, dadurch gekennzeichnet, daß der rostfreie Stahl mit Chrom und dann mit Nickel überzogen bzw. plattiert wird, um einen doppelten Überzug als Zwischenmetall-Lage zu bilden.

12. Verfahren nach einem der Ansprüche 1 und 2, dadurch gekennzeichnet, daß der rostfreie Stahl mit Chrom als Zwischenmetall-Lage überzogen bzw. plattiert wird und daß eine vakuumerschmolzene Nickel-Folie als zusätliche Zwischenmetall-Lage zwischen dem chromüberzogenen rostfreien Stahl und dem Kupfer eingefügt wird.

FIG. 1

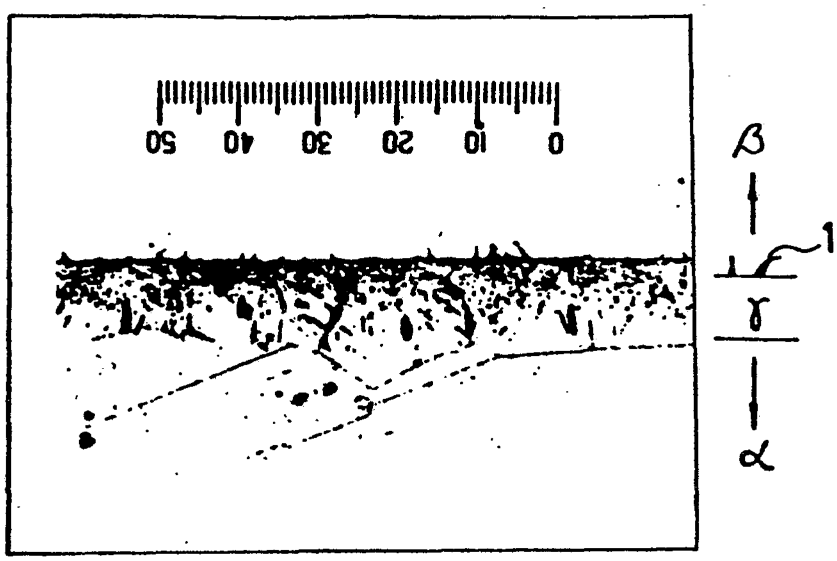


FIG. 2

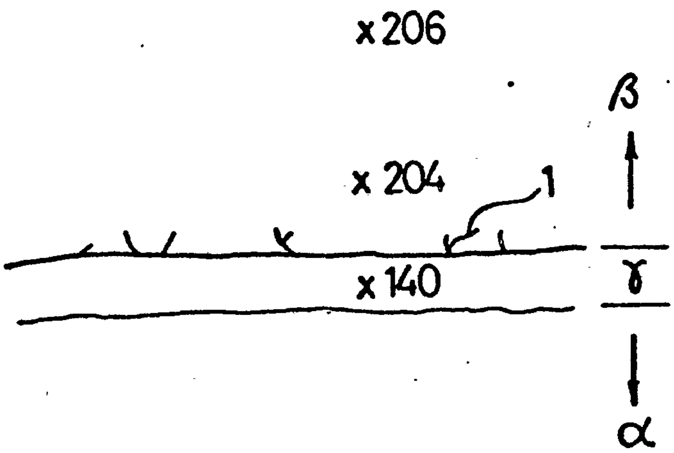


FIG. 3

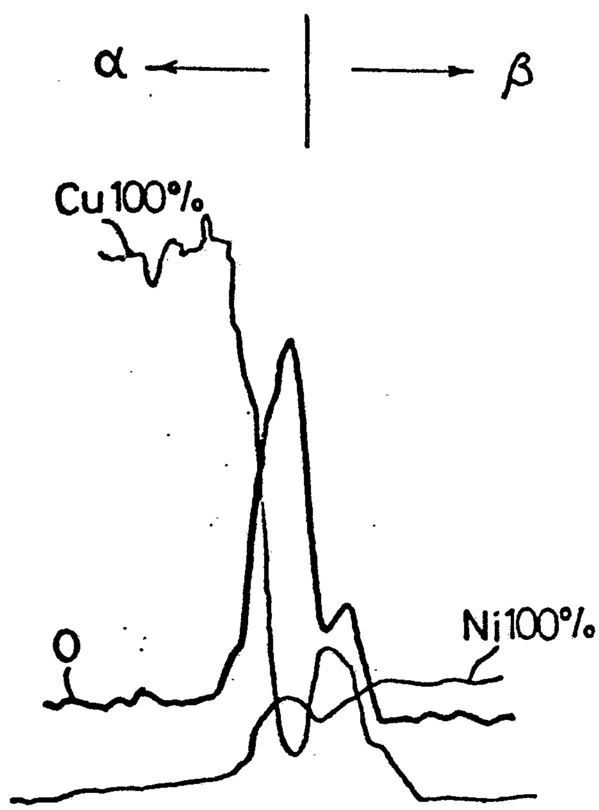

FIG. 4

(A)

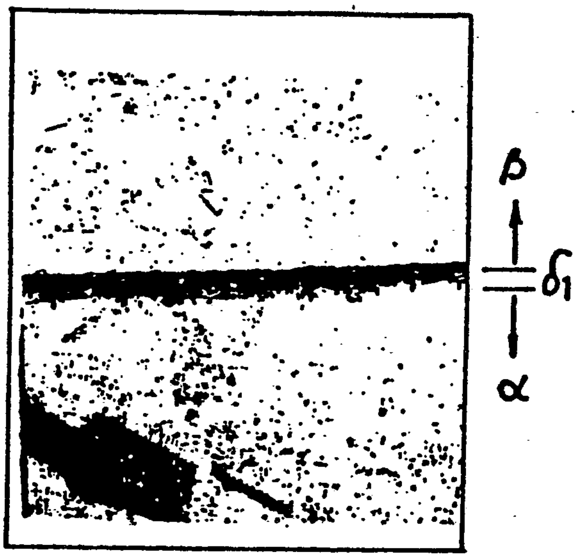


(B)

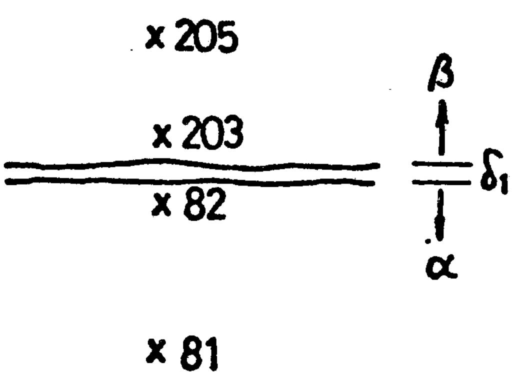


FIG. 5

(A)

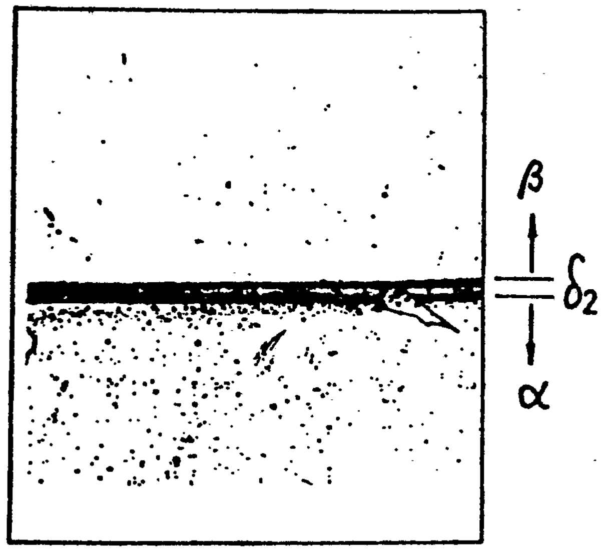


(B)